# EUROPÄISCHE PATENTSCHRIFT

(11) **EP 0 408 850 B1**
(45) Veröffentlichungstag und Bekanntmachung des Hinweises auf die Patenterteilung: **15.12.1993**
(21) Anmeldenummer: 90108982.1
(22) Anmeldetag: 12.05.1990
(51) Int. Cl.: A01D 43/10

(54) **Selbstfahrende Erntemaschine**
Self-propelled harvesting machine
Moissonneuse automotrice

(30) Priorität: 17.07.1989 DE 3923637; 08.12.1989 DE 3940673
(43) Veröffentlichungstag der Anmeldung: 23.01.1991
(73) Patentinhaber: Klöckner-Humboldt-Deutz Aktiengesellschaft, 51149 Köln (DE)
(72) Erfinder: Schmittbetz, Klaus, D-8884 Höchstädt (DE); Liebers, Ulrich, D-4040 Neuss 1 (DE)
(74) Vertreter: Haft, von Puttkamer, Berngruber, Czybulka

(56) Entgegenhaltungen:
- EP-B- 0 014 707
- DD-A- 155 230
- DE-A- 1 962 777
- DE-A- 3 135 992
- DE-A- 3 331 319
- DE-A- 3 724 039
- DE-B- 1 198 108
- DE-B- 2 459 007
- DE-C- 2 107 575
- DE-C- 2 917 191
- US-A- 4 445 313
- SOVIET INVENTIONS ILLUSTRATED, P,Q Sektionen, Woche 8604, 5. März 1986 DERWENT PUBLICATIONS LTD., London, P 12

## Beschreibung

Die vorliegende Erfindung betrifft eine selbstfahrende Erntemaschine, insbesondere für Grünfutter.

Aus der DE-PS 21 07 575 ist ein selbstfahrender Schwadmäher bekannt, mit einer Aufbereitungseinrichtung und mit einem Mähtisch mit Schneidwerk und Haspel.

Aus der DE-OS 38 18 904 ist eine Mähvorrichtung mit einem Messerbalken bekannt, z.B. für einen Motormäher mit Frontalschnitt, der einen eigenen Motor, einen Fahrersitz und ein Steuerrad besitzt.

Die DE-PS 29 17 191 beschreibt eine selbstfahrende Mähmaschine mit einer aus mehreren Walzen und mehreren rotierenden Bürsten bestehenden Aufbereitungsanordnung sowie einem Förderband und einer mattenbildenden Walze.

Aus der EP-A 205 206 ist eine Erntemaschine mit einer Vielzahl von Walzen sowie zwei Förderbändern zur Aufbereitung des Erntegutes bekannt.

Schließlich ist noch aus der EP-PS 14 707 eine Vorrichtung zum Aufbereiten von geschnittenem Gras bekannt, wobei die Konditioniervorrichtung einen bürstenartigen Aufbau aufweist mit einer Vielzahl von elastischen langgestreckten Elementen.

Aus der DE-OS 19 62 777 ist ein Verfahren und eine Vorrichtung zur Vorbereitung von Halmgut auf Silierung oder Trocknung bekannt, wobei das gemähte Gut einem Mähprozeß, einem Aufnehmerprozeß, einem der Entfernung von groben Fremdkörpern dienenden Abweisungsprozeß sowie einem eine Feinstzerkleinerung auslösenden Aufbereitungsprozeß unterworfen wird. Eine Mattenbildung findet bei diesem bekannten Verfahren nicht statt; aufgrund der Umlenkung des Erntegutes senkrecht nach oben in einen Bunker, in den es waagrecht eingegeben wird, erfolgt eine Zerfaserung bei der Umlenkung, die einer Mattenbildung entgegenwirken würde.

Die US-A 44 45 313 beschreibt eine Erntemaschine für Grünfutter, die eine Konditioniereinrichtung aufweist, welche aus zwei Paar gegenläufig angetriebener und hintereinander angeordneter Quetschwalzen besteht, die jeweils mit entlang ihres Außenumfangs angeordneten schraubenförmigen Rippen dergestalt versehen sind, daß möglichst zahlreiche Quetsch- und Knickstellen der Stengel des Grünfutters erzielt werden. Damit soll die Trockenzeit der Stengel an diejenige der Blätter angepaßt werden.

Mit diesen bekannten Erntemaschinen ist die Futterernte und die Futterkonservierung nährstoff- und energiesparender geworden. Insbesondere unter den schlechten in Mitteleuropa herrschenden Wetterbedingungen reicht jedoch die damit erzielbare Feldtrocknungszeit für Heu bzw. Silierung oftmals nicht aus.

Aufgabe der vorliegenden Erfindung ist es, eine selbstfahrende Erntemaschine, insbesondere für Grünfutter zu schaffen, mit der die Futtererntezeit wesentlich verkürzt werden kann, so daß nicht nur Energie gespart wird, sondern auch das Wetterrisiko weitgehend vermieden wird.

Die Lösung dieser Aufgabe erfolgt mit den im kennzeichnenden Teil des Anspruches 1 angegebenen Merkmalen; vorteilhafte Ausgestaltungen sind in den Unteransprüchen beschrieben.

Mit der erfindungsgemäßen Erntemaschine wird der Vorteil erzielt, daß aufgrund der gründlichen Zerfaserung und der Mattenformung des Erntegutes die Feldtrocknungszeit auf wenige Stunden verringert wird, so daß nicht nur eine Eintages-Futterernte, sondern sogar eine Halbtages-Futterernte ermöglicht wird, so daß auch kurze Schönwetterperioden zur Futterernte ausreichen. Der gesamte Energiebedarf für Mähen, Aufbereiten und Mattenformung ist erheblich geringer als bei den herkömmlichen Erntemaschinen, da die Flächenleistung erheblich vergrößert ist.

Im folgenden wird die Erfindung anhand der Zeichnung näher erläutert, in der ein vorteilhaftes Ausführungsbeispiel schematisch dargestellt ist. Es zeigen:
Fig. 1 einen Längsschnitt durch die Maschine und
Fig. 2 und 3 Draufsichten auf das Transportband.

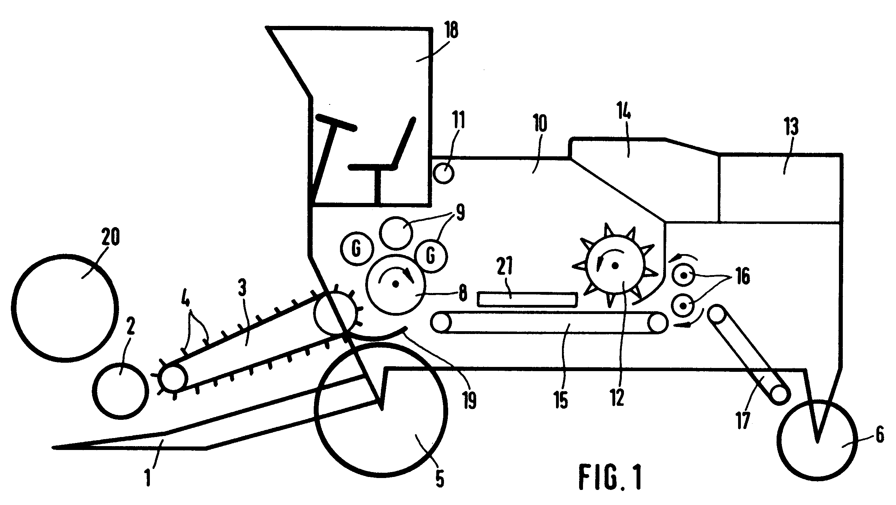

Fig. 1 zeigt schematisch einen Längsschnitt durch eine erfindungsgemäße selbstfahrende Erntemaschine, wobei mit 1 ein Mähwerk, z.B. ein Messerbalken bezeichnet ist, wie er von den Mähdrescher-Schneidwerken her bekannt ist. Eine mögliche Breite des Messerbalkens beträgt 3,0 m, so daß eine derartige selbstfahrende Erntemaschine ohne besondere gesetzliche Auflagen mit montiertem Messerbalken auf öffentlichen Strassen bewegt werden kann. Oberhalb des Messerbalkens ist eine an und für sich bekannte Einzugsschnecke 2 angeordnet, die der Weiterführung des Erntegutes zu einem Förderband 3 dient, welches das geschnittene Erntegut mit Hilfe von elastischen Bürsten 4 aufnimmt und zu einer ersten Aufbereitungsanordnung 8, 9 führt. Über der Einzugsschnecke 2 kann als weitere Zuführhilfe eine Haspel 20 angeordnet werden. Anstelle des Messerbalkens kann auch ein Trommelmähwerk oder ein Scheibenmähwerk verwendet werden.

Diese erste Aufbereitungsanordnung besteht vorteilhafterweise aus einer Schneidkantenwalze 8 und einer Vielzahl diese entlang eines Teils ihres Umfangs umgebenden und im Abstand zu ihr angeordneten Planeten-Riffelwalzen 9 geringeren Durchmessers, deren Drehrichtung entgegengesetzt zu derjenigen der Schneidkantenwalze 8 ist. Die Drehgeschwindigkeit der Planeten-Riffelwalzen kann dabei unterschiedlich zu derjenigen der Schneidkantenwalze sein. Entsprechend dem Abstand zwischen der Schneidkantenwalze und der Planeten-Riffelwalzen, deren Achsen parallel zueinander angeordnet sind, erfolgt eine erste gründliche Aufbereitung des Ernteguts durch Verletzungen der äußeren Zellschicht bei den Stengeln und Halmen. Das derart zerfaserte Erntegut wird von der ersten Aufbereitungsanordnung auf ein im wesentlichen waagrecht angeordnetes Transportband 15 abgegeben, wobei oberhalb dieses Transportbandes ein Pufferraum 10 vorgesehen ist zur Aufnahme von überschüssigem Erntegut. Ebenfalls oberhalb des Transportbandes 15 und hinter dem Pufferraum 10 ist eine Dosierwalze 12 vorgesehen, die das Erntegut einer zweiten Aufbereitungsanordnung 16 zuführt, die vorzugsweise aus zwei sich entgegengesetzt zueinander drehenden und im Abstand voneinander in einer senkrechten Ebene übereinander angeordneten Quetschwalzen besteht. Das Erntegut passiert diese zweite Aufbereitungsanordnung 16 und wird durch diese zu einer Matte von vorzugsweise 6 bis 10 mm Stärke geformt. Der größte Teil des im Schnittgut enthaltenen Wassers verdunstet nach Ablage der Matte auf dem Boden, wohingegen der an den Fasern haftende verbleibende Zellsaft die feineren Teile an die Matte bindet, sofern eine ausreichende Preßkraft von der Aufbereitungsanordnung 16 auf das sie passierende Erntegut ausgeübt wird. Anschließend wird das zu einer Matte geformte Erntegut durch ein unter einem Winkel zum Boden geneigt angeordnetes Ablageband 17 auf dem Boden abgelegt.

Mit 5 und 6 sind die Vorder- bzw. Hinterräder der selbstfahrenden Erntemaschine bezeichnet, mit 18 ein Fahrerstand bzw. eine Fahrerkabine mit Lenkrad und einer Steuerkonsole, mit 13 ein Motor, z.B. ein Dieselmotor, mit 14 ein Kraftstofftank und mit 11 schematisch eine Zwischenwelle, die mit dem Motor 13 verbunden ist.

Die oberhalb des Transportbandes 15 angeordnete Dosierwalze 12 hat die Aufgabe für eine gleichmäßige Weiterleitung des Erntegutes zur zweiten Aufbereitungsanordnung 16 zu sorgen und diese damit gleichmäßig zu beschicken. Eine ungleichmäßige Zuführung wird durch den vor der Dosierwalze 12 angeordneten Pufferraum 10 ausgeglichen. Vorzugsweise ist die Rotationsgeschwindigkeit der Dosierwalze einstellbar, um so gegebenenfalls einen überfüllten Pufferraum 10 schneller entleeren zu können.

Mit 19 ist eine Steinfangmulde bezeichnet, die vorteilhafterweise unterhalb des Eintrittsspaltes zwischen dem Förderband 3 und der ersten Aufbereitungsanordnung 8, 9 vorgesehen ist.

Der Motor 13 der selbstfahrenden Erntemaschine ist vorzugsweise über die Zwischenwelle 11 sowohl mit der ersten Aufbereitungsanordnung 8, 9, mit dem Förderband 3, mit einem Paar der Räder 5, 6 sowie dem Messerbalken 1 und der Haspel 2 verbunden, um diese Teile durch die Motorkraft anzutreiben.

Ein Antrieb aller Räder für schwere Einsätze ist ebenfalls möglich.

Das Transportband 15, die Dosierwalze 12, die zweite Aufbereitungsanordnung 16, d.h. die beiden Quetschwalzen zur Bildung einer Matte, sowie das Ablageband 17 sind vorteilhafterweise über ein nicht näher dargestelltes, geeignetes Getriebe mit dem Radantrieb 6 verbunden, so daß deren Antrieb eine Funktion der Geschwindigkeit der selbstfahrenden Erntemaschine ist und die Ablage der Matte nur während der Fahrt erfolgt. Zur Anpassung der Ablegegeschwindigkeit der Matte auf dem Boden ist die Geschwindigkeit des Transportbandes durch geeignete Maßnahmen am Getriebe einstellbar.

Die Breite der selbstfahrenden Erntemaschine beträgt vorteilhafterweise ein Drittel bis ein Viertel der Schnittbreite des Messerbalkens, um so eine kompakte Ausführung der Maschine zu ermöglichen.

Der Fahrerplatz, d.h. die Kabine ist vorzugsweise oberhalb der ersten Aufbereitungsanordnung 8, 9 angeordnet, um so eine gute Sicht sowohl auf den Messerbalken als auch auf das Erntegut zu gewährleisten.

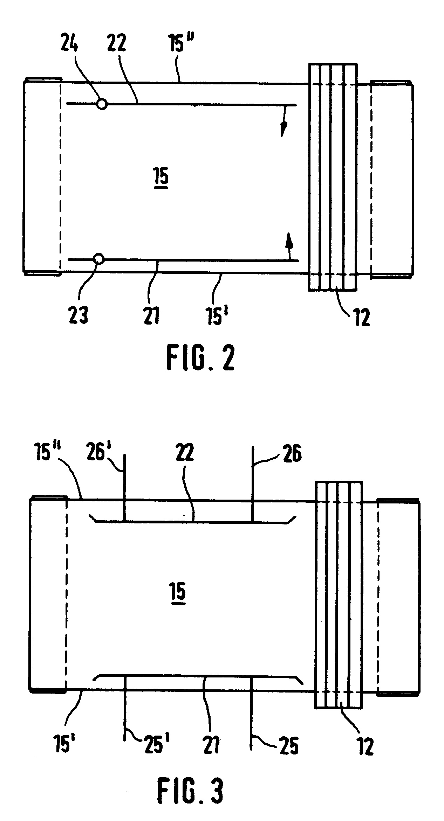

Fig. 2 zeigt eine Draufsicht auf das Transportband 15, wobei in der Nähe der beiden Außenränder 15′, 15˝ des Transportbandes jeweils ein bewegliches, sich im wesentlichen parallel zum Transportband erstreckendes senkrecht angeordnetes Führungsblech 21, 22 vorgesehen ist, mit dem die Breite der Matte aus Erntegut einstellbar ist. Durch nicht dargestellte elektrische, hydraulische oder mechanische Schwenkmittel können die beiden Führungsbleche 21, 22 um zwei im wesentlichen senkrechte Achsen 23, 24 in Richtung der beiden Pfeile (und entgegengesetzt dazu) verschwenkt werden, so daß die Breite der von der Dosierwalze 12 der zweiten Aufbereitungsanordnung 16 zugeführten matte veränderlich ist.

Fig. 3 zeigt eine Draufsicht auf ein Transportband 15, wobei gemäß einem weiteren Ausführungsbeispiel in der Nähe der beiden Außenränder 15′, 15˝ des Transportbandes jeweils ein sich im wesentlichen parallel zum Transportband erstreckendes und senkrecht angeordnetes Führungsblech 21, 22 vorgesehen ist, ebenfalls zur Einstellung der Breite der Matte aus Erntegut, wobei jedoch hier die beiden Führungsbleche 21, 22 durch schematisch angeordnete Schub-Zugstangen 25, 25′ und 26, 26′ senkrecht zur Längsachse des Transportbandes 15 verschiebbar sind. Die Schub-Zugstangen können ebenfalls elektrisch, hydraulisch oder mechanisch betätigt werden.

## Patentansprüche

1. Selbstfahrende Erntemaschine, insbesondere für Grünfutter, gekennzeichnet durch die folgende Kombination:
a) ein sich quer zur Fahrtrichtung erstreckender Messerbalken (1),
b) eine oberhalb des Messerbalkens (1) nach hinten versetzte Einzugsschnecke (2),
c) ein hinter dem Messerbalken (1) angeordnetes Förderband (3) für das Erntegut,
d) eine hinter dem Förderband (3) angeordnete, das Erntegut zerfasernde erste Aufbereitungsanordnung (8, 9),
e) ein Transportband (15), das das aufbereitete Erntegut aufnimmt,
f) ein oberhalb des Transportbandes (15) angeordneter Pufferraum,
g) eine oberhalb des Transportbandes (15) und hinter dem Pufferraum angeordnete Dosierwalze (12),
h) eine hinter dem Transportband (15) angeordnete zweite Aufbereitungsanordnung (16), die aus zwei gegenläufig angetriebenen und im Abstand voneinander in senkrechter Richtung übereinander angeordneten Quetschwalzen besteht, welche durch geeigneten Andruck auf das Erntegut dieses über den an den Fasern haftenden Zellsaft zu einer Matte formen und
i) ein Ablageband (17) für das geerntete und aufbereitete Futter in Form einer Matte auf dem Boden.

2. Erntemaschine nach Anspruch 1, dadurch gekennzeichnet, daß oberhalb des Messerbalkens (1) eine drehbare Haspel (20) angeordnet ist.

3. Erntemaschine nach Anspruch 1, dadurch gekennzeichnet, daß das Förderband (3) mit einer Vielzahl von elastischen Bürsten (4) versehen ist.

4. Erntemaschine nach Anspruch 1, dadurch gekennzeichnet, daß das Förderband (3) aus Ketten mit Schlagleisten besteht.

5. Erntemaschine nach Anspruch 1, dadurch gekennzeichnet, daß unterhalb des Förderbandes (3) eine Steinfangmulde (19) angeordnet ist.

6. Erntemaschine nach Anspruch 1, dadurch gekennzeichnet, daß die erste Aufbereitungsanlage aus einer Schneidkantenwalze oder Riffelwalze (8) und einer Vielzahl sich in entgegengesetzter Richtung zur Schneidkantenwalze oder Riffelwalze drehbarer Planeten-Riffelwalzen (9) besteht, die entlang eines Teils des Umfangs der Schneidkantenwalze (8) im Abstand zu dieser derart angeordnet sind, daß ihre Achsen parallel zu derjenigen der Schneidkantenwalze verlaufen, wobei sämtliche Walzenachsen im wesentlichen senkrecht zur Förderrichtung des Erntegutes ausgerichtet sind.

7. Erntemaschine nach Anspruch 1, dadurch gekennzeichnet, daß die erste Aufbereitungsanordnung aus einer Schneidkantenwalze oder Riffelwalze (8) und einer Vielzahl sich in entgegengesetzter Richtung zur Schneidkantenwalze oder Riffelwalze drehbarer Planeten-Riffelwalzen (9) besteht, die entlang eines Teils des Umfangs der Schneidkantenwalze (8) im Abstand zu dieser derart angeordnet sind, daß ihre Achsen parallel zu derjenigen der Schneidkantenwalze verlaufen, wobei sämtliche Walzenachsen unter einem Winkel zur Förderrichtung des Erntegutes ausgerichtet sind.

8. Erntemaschine nach Anspruch 1, dadurch gekennzeichnet, daß die zweite Aufbereitungsanordnung 16 aus zwei sich in entgegengesetzter Richtung zueinander drehenden und im Abstand voneinander und in senkrechter Richtung übereinander angeordneten Quetschwalzen besteht zur Erzeugung einer Erntegutmatte.

9. Erntemaschine nach Anspruch 2, dadurch gekennzeichnet, daß die erste Aufbereitungsanordnung (8, 9), das Förderband (3), die Antriebsräder (5 oder 6) der Erntemaschine, der Messerbalken (1) und die Haspel (20) über eine Zwischenwelle (11) mit dem Antriebsmotor (13) der Erntemaschine mechanisch oder hydraulisch verbunden sind.

10. Erntemaschine nach einem der vorhergehenden Ansprüche, dadurch gekennzeichnet, daß das Transportband (15), die Dosierwalze (12), das Ablageband (17) und die zweite Aufbereitungsanordnung (16) über ein Getriebe mit mindestens einem der Lenkräder (6) der Erntemaschine verbunden sind.

11. Erntemaschine nach einem der vorhergehenden Ansprüche, dadurch gekennzeichnet, daß oberhalb der ersten Aufbereitungsanordnung (8, 9) eine Fahrerkabine (18) vorgesehen ist.

12. Erntemaschine nach einem der vorhergehenden Ansprüche, dadurch gekennzeichnet, daß in der Nähe der beiden Außenränder des Transportbandes (15) jeweils ein bewegliches, sich im wesentlichen parallel zum Transportband erstreckendes senkrecht angeordnetes Führungsblech (21, 22) vorgesehen ist, mit dem die Breite der Matte aus Erntegut einstellbar ist.

13. Erntemaschine nach Anspruch 12, dadurch gekennzeichnet, daß die Führungsbleche (21, 22) um eine senkrechte Achse (23, 24) schwenkbar sind.

14. Erntemaschine nach Anspruch 12, dadurch gekennzeichnet, daß die Führungsbleche (21, 22) senkrecht zur Längsachse des Transportbandes (15) verschiebbar sind.

15. Erntemaschine nach einem der vorhergehenden Ansprüche, dadurch gekennzeichnet, daß das Mähwerk (1) ein Trommelmähwerk ist.

16. Erntemaschine nach einem der vorhergehenden Ansprüche, dadurch gekennzeichnet, daß das Mähwerk (1) ein Scheibenmähwerk ist.

17. Erntemaschine nach Anspruch 9, dadurch gekennzeichnet, daß das Getriebe für den Antrieb des Transportbandes (15) derart ausgelegt ist, daß die Geschwindigkeit des Transportbandes (15) einstellbar ist.

18. Erntemaschine nach Anspruch 10, dadurch gekennzeichnet, daß das Getriebe für den Antrieb der Dosierwalze (12) derart ausgelegt ist, daß die Rotation der Dosierwalze einstellbar ist.

## Claims

1. A self-propelled harvesting machine, more particularly for green fodder, characterised by the following combination:
a) a cutter beam (1) extending transversely to the direction of travel,
b) a feed screw (2) offset to the rear above the cutter bar (1),
c) a belt (3) for conveying the harvested material and disposed behind the cutter bar (1),
d) a first conditioning device (8, 9) for disintegrating the harvested material and disposed behind the conveyor belt (3),
e) a conveyor belt (15) for receiving the conditioned material,
f) a buffer space disposed above the conveyor belt (15),
g) a metering roller (12) disposed above the conveyor belt (15) and behind the buffer space,
h) a second conditioning device (16) disposed behind the conveyor belt (15) and comprising two crushing rollers driven in opposite directions and spaced apart one above the other in the horizontal direction, the rollers compressing the harvested material so that it is formed into a mat by the cell sap adhering to the fibres, and
i) a belt (17) for depositing the harvested, conditioned fodder in the form of a mat on the ground.

2. A harvesting machine according to claim 1, characterised in that a rotatable winch (20) is disposed above the cutter bar (1).

3. A harvesting machine according to claim 1, characterised in that the conveyor belt (3) is provided with a number of resilient brushes (4).

4. A harvesting machine according to claim 1, characterised in that the conveyor belt (3) comprises chains and beating arms.

5. A harvesting machine according to claim 1, characterised in that a pan (19) for trapping stones is disposed underneath the conveyor belt (3).

6. A harvesting machine according to claim 1, characterised in that the first conditioning device comprises a cutting-edge roller or fluted roller (8) and a number of planetary fluted rollers (9) rotatable in the opposite direction to the cutting-edge roller or fluted roller and disposed along part of the periphery of the cutting-edge roller (8) at a distance therefrom so that their axes extend parallel to the axis of the cutting-edge roller, all the roller axes being substantially at right angles to the direction in which the harvested material is conveyed.

7. A harvesting machine according to claim 1, characterised in that the first conditioning device comprises a cutting-edge roller or fluted roller (8) and a number of planetary fluted rollers (9) rotatable in the opposite direction to the cutting-edge roller or fluted roller and disposed along port of the periphery of the cutting-edge roller (8) at a distance therefrom so that their axes extend parallel to the axis of the cutting-edge roller, all the roller axes being at an angle to the direction in which the harvested material is conveyed.

8. A harvesting machine according to claim 1, characterised in that the second conditioning device (16) comprises two crushing rollers rotating in opposite directions, spaced apart and placed one above the other in the vertical direction, for converting the harvested material into a mat.

9. A harvesting machine according to claim 2, characterised in that the first conditioning device (8, 9), the conveyor belt (3), the driving wheels (5 or 6) of the harvesting machine, the cutter bar (1) and the winch (20) are mechanically or hydraulically connected by a main drive shaft (11) to the engine (13) for driving the harvesting machine.

10. A harvesting machine according to any of the preceding claims, characterised in that the conveyor belt (15), the metering roller (12), the depositing belt (17) and the second conditioning device (16) are connected by a gear unit to at least one steering wheel (6) of the harvesting machine.

11. A harvesting machine according to any of the preceding claims, characterised in that a driver's cabin (18) is provided above the first conditioning device (8, 9).

12. A harvesting machine according to any of the preceding claims, characterised in that a vertical moving guide plate (21, 22) extending substantially parallel to the conveyor belt (15) is provided near each outer edge of the conveyor belt (15), so as to adjust the width of the mat of harvested material.

13. A harvesting machine according to claim 12, characterised in that the guide plates (21, 22) are pivotable around a vertical axis (23, 24).

14. A harvesting machine according to claim 12, characterised in that the guide plates (21, 22) are movable at right angles to the longitudinal axis of the conveyor bolt (15).

15. A harvesting machine according to any of the preceding claims, characterised in that the reaping mechanism is a drum mechanism.

16. A harvesting machine according to any of the preceding claims, characterised in that the reaping mechanism is a disc mechanism.

17. A harvesting machine according to claim 9, characterised in that the gear unit for driving the conveyor belt (15) is disposed so that the speed of the conveyor belt (15) is adjustable.

18. A harvesting machine according to claim 10, characterised in that the gear unit for driving the metering roller (12) is designed so that the rotation of the metering roller is adjustable.

## Revendications

1. Moissonneuse automotrice, notamment pour la récolte de fourrage vert, caractérisée par la combinaison des éléments suivants :
a) une lame de coupe (1) perpendiculaire à la direction du déplacement,
b) une vis d'alimentation (2) au-dessus et en arrière de la lame de coupe (1),
c) une bande (3) d'alimentation placée derrière la lame de coupe (1) et servant à introduire la matière coupée dans la machine,
d) derrière la bande (3) un premier dispositif de traitement (8, 9) défibrant la matière moissonnée,
e) une bande transporteuse (15) recevant la matière sortant du premier dispositif de traitement,
f) un volume tampon, au-dessus de la bande transporteuse (15),
g) un rouleau doseur (12), situé au-dessus de la bande transporteuse (15) et derrière le volume tampon,
h) derrière la bande transporteuse (15), un second dispositif de traitement (16) comprenant deux rouleaux tasseurs tournant en sens inverses, présentant entre eux une certaine distance, et superposés verticalement l'un par rapport à l'autre, ces rouleaux exerçant sur la matière moissonnée une certaine pression de manière à former une natte en utilisant l'effet d'adhésion entre les fibres produit par la sève des cellules,
i) un transporteur de sortie (17) assurant le dépôt sur le sol du fourrage moissonné et traité.

2. Moissonneuse selon la revendication 1, caractérisée en ce que la lame de coupe (1) est surmontée par une vis d'alimentation (20).

3. Moissonneuse selon la revendication 1, caractérisée en ce que la bande d'alimentation (3) est équipée d'une série de brosses élastiques (4).

4. Moissonneuse selon la revendication 1, caractérisée en ce que la bande d'alimentation (3) est constituée de chaînes équipées de barrettes fouetteuses.

5. Moissonneuse selon la revendication 1, caractérisée en ce qu'une auge collectrice de cailloux (19) est placée en dessous de la bande d'alimentation (3).

6. Moissonneuse selon la revendication 1, caractérisée en ce que le premier poste de traitement est constitué d'un rouleau à bords tranchants ou d'un rouleau cannelé (8) et d'une série de rouleaux cannelés planétaires (9) tournant en sens inverse de celui du rouleau (8), ces rouleaux (9) étant disposés sur une partie de la périphérie du rouleau (8), à une certaine distance de celui-ci et tournant sur des axes parallèles à celui du rouleau (8), tous les axes de rotation étant sensiblement perpendiculaires à la direction de déplacement de la moissonneuse.

7. Moissonneuse selon la revendication 1, caractérisée en ce que le premier poste de traitement est constitué d'un rouleau à bords tranchants ou d'un rouleau cannelé (8) et d'une série de rouleaux cannelés planétaires (9) tournant en sens inverse de celui du rouleau (8), ces rouleaux (9) étant disposés sur une partie de la périphérie du rouleau (8), à une certaine distance de celui-ci et tournant sur des axes parallèles à celui du rouleau (8), tous les axes de rotation faisant un angle avec la direction de déplacement de la moissonneuse.

8. Moissonneuse selon la revendication 1, caractérisée en ce que le second poste de traitement (16) est constitué de deux rouleaux tasseurs tournant en sens inverses, disposés à des hauteurs différentes et présentant entre eux une certaine distance, ces rouleaux produisant une natte de matière moissonnée.

9. Moissonneuse selon la revendication 2, caractérisée en ce que le premier dispositif de traitement (8, 9), la bande d'alimentation (3), les roues motrices (5 ou 6) de la moissonneuse, la lame de coupe (1) et la vis d'alimentation (20) sont reliés mécaniquement ou hydrauliquement au moteur d'entraînement (13) de la moissonneuse, par un arbre intermédiaire (11).

10. Moissonneuse selon l'une quelconque des revendications précédentes, caractérisée en ce que la bande transporteuse (15), le rouleau doseur (12), la bande de sortie (17) et le second dispositif de traitement (16) sont reliés par une transmission à au moins une des roues directrices (6) de la moissonneuse.

11. Moissonneuse selon l'une quelconque des revendications précédentes, caractérisée en ce qu'elle comporte une cabine de conduite (18) placée au-dessus du premier dispositif de traitement (8, 9).

12. Moissonneuse selon l'une quelconque des revendications précédentes, caractérisée en ce qu'elle comporte, près de chacun des bords de la bande transporteuse (15), une tôle de guidage mobile (21, 22) disposée perpendiculairement, sensiblement parallèle à la bande et dont le déplacement permet de régler la largeur de la natte de matière moissonnée.

13. Moissonneuse selon la revendication 12, caractérisée en ce que les tôles de guidage (21, 22) peuvent pivoter autour d'axes verticaux (23, 24).

14. Moissonneuse selon la revendication 12, caractérisée en ce que les tôles de guidage (21, 22) peuvent se déplacer selon une direction perpendiculaire à l'axe longitudinal de la bande transporteuse (15).

15. Moissonneuse selon l'une quelconque des revendications précédentes, caractérisée en ce que l'outil de récolte est un outil à tambour.

16. Moissonneuse selon l'une quelconque des revendications précédentes, caractérisée en ce que l'outil de récolte est un outil à disques.

17. Moissonneuse selon la revendication 9, caractérisée en ce que la transmission assurant l'entraînement de la bande transporteuse (15) permet de régler la vitesse de celle-ci.

18. Moissonneuse selon la revendication 10, caractérisée en ce que la transmission assurant l'entraînement du rouleau doseur (12) permet de régler la vitesse de celui-ci.
